# EUROPEAN PATENT APPLICATION

(11) **EP 4 618 653 A1**
(43) Date of publication of application: **17.09.2025**
(21) Application number: 22964899.3
(22) Date of filing: 11.11.2022
(51) Int. Cl.: H04W 72/04

(54) **SIDELINK-BASED POSITIONING REFERENCE SIGNAL (PRS) RESOURCE DETERMINATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/131563
(87) International publication number: WO 2024/098431

(57) **Abstract**

Disclosed in embodiments of the present disclosure are a sidelink (SL)-based positioning reference signal (PRS) resource determination method and an apparatus, applicable to communication systems. The method comprises: a first terminal device initiating SL positioning; sending instruction information to a second terminal device, the instruction information being used for instructing the second terminal device to determine a resource for sending am SL PRS; and/or sending instruction information to a network device, the instruction information being used for instructing the network device to determine a resource for sending an SL PRS. By implementing the method of the present disclosure, a UE participating in SL positioning and/or a network device responsible for resource allocation in SL positioning can effectively determine, on the basis of instruction information, a resource for sending an SL PRS, thereby effectively improving the effect of SL positioning.

## Description

### FIELD

The present disclosure relates to a field of communication technologies, in particular to a method and an apparatus for determining a sidelink-based positioning reference signal (PRS) resource.

### BACKGROUND

The positioning based on a sidelink (SL) between a terminal (e.g., user equipment (UE)) and a terminal is called SL positioning, which usually includes SL absolute positioning, SL relative positioning and ranging. The SL positioning method includes: a sidelink round trip time (SL RTT), a sidelink time difference of arrival (SL TDOA), a sidelink angle of arrival (SL AOA), a SL carrier phase, etc. Further, the SL positioning method may be combined with a Uu positioning method (the Uu positioning method refers to positioning based on a Uu interface (the Uu interface is a radio interface between the UE and a base station)) to improve positioning accuracy. If a absolute position of UE needs to be acquired, the Uu positioning method may be used to acquire a absolute position of reference UE, and then a relative position of the target UE and the reference UE may be acquired, so that the absolute position of the target UE may be calculated with reference to the absolute position of the reference UE and the relative position of the target UE and the reference UE. The positioned UE may be called the target UE, and the UE that positions the target UE is called an anchor UE. If there is no sidelink (SL) between two UEs, assistant UE may be used, so that the SL positioning result between the two UEs may be acquired by measuring the SL positioning result between each of the two UEs and the assistant UE.

In the related art, in the SL positioning, resources (such as time-frequency domain resources) for transmitting a sidelink positioning reference signal (SL PRS) have a great relationship with quality of service (QoS) requirements, while only the UE that initiates the SL positioning is clear about the QoS requirements.

In this way, UE participating in the SL positioning and a network device (such as a base station and/or a location management function (LMF)) responsible for resource allocation in the SL positioning cannot effectively determine the resources for transmitting the SL PRS, thus affecting the positioning effect of the sidelink (SL).

### SUMMARY

Embodiments of the present disclosure provide a method and an apparatus for determining a sidelink-based positioning reference signal (PRS) resource, a communication system, a chip system, a storage medium, a computer program and a computer program product, which may be applied to a field of communication technologies, so that UE participating in SL positioning and/or a network device responsible for resource allocation in SL positioning may effectively determine a resource for transmitting an SL PRS based on indication information, thus effectively improving the positioning effect of the sidelink.

In a first aspect, an embodiment of the present disclosure provides a method for determining a sidelink-based PRS resource, which is performed by a first terminal, and includes: initiating sidelink (SL) positioning; transmitting indication information to a second terminal, in which the indication information is configured to instruct the second terminal to determine a resource for transmitting a sidelink positioning reference signal (SL PRS); and/or transmitting indication information to a network device, in which the indication information is configured to instruct the network device to determine a resource for transmitting a sidelink positioning reference signal (SL PRS).

In some embodiments of the present disclosure, the indication information includes at least one of: sidelink location service quality of service (LCS QoS) information; or SL PRS configuration information.

In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position; or
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, in which the frequency hopping indication indicates whether to hop a frequency.

In some embodiments of the present disclosure, the second terminal is a terminal for performing the SL positioning.

In some embodiments of the present disclosure, transmitting the indication information to the second terminal includes:
transmitting a first signaling to the second terminal, wherein the first signaling includes the indication information,
in which the first signaling includes at least one of:
a sidelink positioning protocol (SLPP) signaling; or
a ranging and sidelink positioning protocol (RSPP) signaling.
In some embodiments of the present disclosure,
the SLPP signaling includes a first message providing assistant information, and the first message providing assistant information includes the indication information; and/or
the RSPP signaling includes a second message providing assistant information, and the second message providing assistant information includes the indication information.

In some embodiments of the present disclosure, transmitting the indication information to the network device includes:
transmitting a second signaling to the network device, wherein the second signaling includes the indication information,
in which in a case that the network device is a base station, the second signaling at least includes:
a radio resource control (RRC) message.
In some embodiments of the present disclosure, transmitting the indication information to the network device includes:
transmitting a second signaling to the network device, wherein the second signaling includes the indication information,
in which in a case that the network device is a location management function (LMF), the second signaling includes at least one of:
a SLPP signaling;
a RSPP signaling; or
a long term evolution (LTE) positioning protocol (LPP) signaling.
In some embodiments of the present disclosure,
the SLPP signaling includes a third message providing assistant information, and the third message providing assistant information includes the indication information; and/or
the RSPP signaling includes a fourth message providing assistant information, and the fourth message providing assistant information includes the indication information; and/or
the LPP signaling includes a fifth message providing assistant information, and the fifth message providing assistant information includes the indication information.
In some embodiments of the present disclosure, the first terminal is in an out-of-coverage state, and the second terminal is in the out-of-coverage state or an in-coverage state.

In a second aspect, an embodiment of the present disclosure provides another method for determining a resource for transmitting a sidelink-based PRS resource, which is performed by a second terminal, and includes: receiving indication information transmitted by a first terminal, in which the indication information is configured to instruct the second terminal to determine a resource for transmitting a sidelink positioning reference signal (SL PRS), and sidelink (SL) positioning is initiated by a first terminal; and determining the resource for transmitting the SL PRS according to the indication information.

In some embodiments of the present disclosure, the indication information includes at least one of:
sidelink location service quality of service (LCS QoS) information; or
SL PRS configuration information.
In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position;
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, wherein the frequency hopping indication indicates whether to hop a frequency.

In some embodiments of the present disclosure, the second terminal is a terminal for performing the SL positioning.

In some embodiments of the present disclosure, receiving the indication information transmitted by the first terminal includes:
receiving a first signaling transmitted by the first terminal, wherein the first signaling includes the indication information,
in which the first signaling includes at least one of:
a sidelink positioning protocol (SLPP) signaling; or
a ranging and sidelink positioning protocol (RSPP) signaling.
In some embodiments of the present disclosure,
the SLPP signaling includes a first message providing assistant information, and the first message providing assistant information includes the indication information; and/or
the RSPP signaling includes a second message providing assistant information, and the second message providing assistant information includes the indication information.
In some embodiments of the present disclosure, determining the resource for transmitting the SL PRS according to the indication information includes:
transmitting the indication information to a network device in response to that the second terminal is in a first resource allocation mode; and
acquiring the resource for transmitting the SL PRS configured by the network device based on the indication information.

In some embodiments of the present disclosure, transmitting the indication information to the network device includes:
transmitting a third signaling to the network device, wherein the third signaling includes the indication information,
in which the third signaling includes at least one of:
a SidelinkUEInformationNR signaling;
an SLPP signaling;
a RSPP signaling; or
a long term evolution (LTE) positioning protocol (LPP) signaling.

In some embodiments of the present disclosure, determining the resource for transmitting the SL PRS according to the indication information includes:
in response to that the second terminal is in a second resource allocation mode, selecting the resource for transmitting the SL PRS according to the indication information.

In some embodiments of the present disclosure, the first terminal is in an out-of-coverage state, and the second terminal is in the out-of-coverage state or an in-coverage state.

In a third aspect, an embodiment of the present disclosure provides another method for determining a sidelink-based positioning reference signal (PRS) resource, which is performed by a network device, and includes: receiving indication information transmitted by a first terminal, wherein the indication information is configured to instruct the network device to determine a resource for transmitting a sidelink positioning reference signal (SL PRS), and sidelink (SL) positioning is initiated by the first terminal; and determining the resource for transmitting the SL PRS according to the indication information.

In some embodiments of the present disclosure, the indication information includes at least one of:
sidelink location service quality of service (LCS QoS) information; or
SL PRS configuration information.

In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position;
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, in which the frequency hopping indication indicates whether to hop a frequency.

In some embodiments of the present disclosure, receiving the indication information transmitted by the first terminal includes:
receiving second signaling transmitted by the first terminal, wherein the second signaling includes the indication information,
in which in a case that the network device is a base station, the second signaling at least includes:
a radio resource control (RRC) message.

In some embodiments of the present disclosure, receiving the indication information transmitted by the first terminal includes:
receiving second signaling transmitted by the first terminal, wherein the second signaling includes the indication information,
in which in a case that the network device is a location management function (LMF), the second signaling includes at least one of:
a sidelink positioning protocol (SLPP) signaling;
a ranging and sidelink positioning protocol (RSPP) signaling; or
a long term evolution (LTE) positioning protocol (LPP) signaling.
In some embodiments of the present disclosure,
the SLPP signaling includes a third message providing assistant information, and the third message providing assistant information includes the indication information; and/or
the RSPP signaling includes a fourth message providing assistant information, and the fourth message providing assistant information includes the indication information; and/or
the LPP signaling includes a fifth message providing assistant information, and the fifth message providing assistant information includes the indication information.

In some embodiments of the present disclosure, the method further includes:
receiving indication information transmitted by a second terminal; and
according to the indication information, configuring the resource for transmitting the SL PRS for the second terminal, wherein the configured resource for transmitting the SL PRS is configured for the second terminal to transmit the SL PRS.

In some embodiments of the present disclosure, receiving the indication information transmitted by the second terminal includes:
receiving a third signaling transmitted by the second terminal, wherein the third signaling includes the indication information,
in which the third signaling includes at least one of:
a SidelinkUEInformationNR signaling;
an SLPP signaling;
a RSPP signaling; or
an LPP signaling.

In some embodiments of the present disclosure, the second terminal is a terminal for performing the SL positioning.

In some embodiments of the present disclosure, the first terminal is in an out-of-coverage state, and the second terminal is in the out-of-coverage state or an in-coverage state.

In a fourth aspect, an embodiment of the present disclosure provides a communication device, which has part or all of functions of the first terminal in the method described in the first aspect. For example, the functions of the communication device may include the functions in part or all of the embodiments of the present disclosure, and may also include the functions of independently implementing any embodiment of the present disclosure. The functions may be realized by hardware, or by hardware executing corresponding software. The hardware or software includes one or more units or modules corresponding to the above functions.

In an implementation, the structure of the communication device may include a transceiving module and a processing module, and the processing module is configured to support the communication device to execute corresponding functions in the above methods. The transceiving module is used to support communication between the communication device and other devices. The communication device may further include a storage module for coupling with the transceiving module and the processing module, and storing necessary computer programs and data of the communication device.

As an example, the processing module may be a processor, the transceiving module may be a transceiver or a communication interface, and the storage module may be a memory.

In a fifth aspect, an embodiment of the present disclosure provides another communication device, which has part or all of functions of the second terminal in the method described in the second aspect. For example, the functions of the communication device may have the functions of part or all of the embodiments of the present disclosure, or may also have the functions of independently implementing any embodiment of the present disclosure. The functions may be realized by hardware, or by hardware executing corresponding software. The hardware or software includes one or more units or modules corresponding to the above functions.

Optionally, in an embodiment of the present disclosure, the structure of the communication device may include a transceiving module and a processing module, and the processing module is configured to support the communication device to perform the corresponding functions in the above methods. The transceiving module is used to support communication between the communication device and other devices. The communication device may further include a storage module for coupling with the transceiving module and the processing module, and storing necessary computer programs and data of the communication device.

In a sixth aspect, an embodiment of the present disclosure provides another communication device, which has part or all of functions of the network device in the method described in the third aspect. For example, the functions of the communication device may have the functions of part or all of the embodiments of the present disclosure, or may also have the functions of independently implementing any embodiment of the present disclosure. The functions may be realized by hardware, or by hardware executing corresponding software. The hardware or software includes one or more units or modules corresponding to the above functions.

Optionally, in an embodiment of the present disclosure, the structure of the communication device may include a transceiving module and a processing module, and the processing module is configured to support the communication device to perform the corresponding functions in the above methods. The transceiving module is used to support communication between the communication device and other devices. The communication device may further include a storage module for coupling with the transceiving module and the processing module, and storing necessary computer programs and data of the communication device.

In a seventh aspect, an embodiment of the present disclosure provides a communication device, which includes a processor, and when the processor calls a computer program in a memory, it performs the method for determining the sidelink-based PRS resource described in the first aspect.

In an eighth aspect, an embodiment of the present disclosure provides a communication device, which includes a processor, and when the processor calls a computer program in a memory, it performs the method for determining the sidelink-based PRS resource described in the second aspect.

In a ninth aspect, an embodiment of the present disclosure provides a communication device, which includes a processor, and when the processor calls a computer program in a memory, it performs the method for determining the sidelink-based PRS resource described in the third aspect.

In a tenth aspect, an embodiment of the present disclosure provides a communication device, which includes a processor and a memory, and a computer program is stored in the memory. The processor executes the computer program stored in the memory, so that the communication device may perform the method for determining the sidelink-based PRS resource described in the first aspect.

In an eleventh aspect, an embodiment of the present disclosure provides a communication device, which includes a processor and a memory, and a computer program is stored in the memory. The processor executes the computer program stored in the memory, so that the communication device may perform the method for determining the sidelink-based PRS resource described in the second aspect.

In a twelfth aspect, an embodiment of the present disclosure provides a communication device, which includes a processor and a memory, and a computer program is stored in the memory. The processor executes the computer program stored in the memory, so that the communication device may perform the method for determining the sidelink-based PRS resource described in the third aspect.

In a thirteenth aspect, an embodiment of the present disclosure provides a communication device, which includes a processor and an interface circuit. The interface circuit is configured to receive a code instruction and transmit it to the processor, and the processor is configured to execute the code instruction to cause the device to perform the method for determining the sidelink-based PRS resource described in the first aspect.

In a fourteenth aspect, an embodiment of the present disclosure provides a communication device, which includes a processor and an interface circuit. The interface circuit is configured to receive a code instruction and transmit it to the processor, and the processor is configured to execute the code instruction to cause the device to perform the method for determining the sidelink-based PRS resource in the second aspect.

In a fifteenth aspect, an embodiment of the present disclosure provides a communication device, which includes a processor and an interface circuit. The interface circuit is configured to receive a code instruction and transmit it to the processor, and the processor is configured to execute the code instruction to cause the device to perform the method for determining the sidelink-based PRS resource described in the third aspect.

In a sixteenth aspect, an embodiment of the present disclosure provides a communication system, which includes the communication device of the fourth aspect, the communication device of the fifth aspect and the communication device of the sixth aspect, or the system includes the communication device of the seventh aspect, the communication device of the eighth aspect and the communication device of the ninth aspect, or the system includes the communication device in the tenth aspect, the communication device in the eleventh aspect and the communication device in the twelfth aspect, or the system includes the communication device of the thirteenth aspect, the communication device of the fourteenth aspect and the communication device of the fifteenth aspect.

In a seventeenth aspect, an embodiment of the present disclosure provides a computer-readable storage medium for storing instructions used for the first terminal, and when the instructions are executed, the first terminal are caused to perform the method for determining the sidelink-based PRS resource in the first aspect.

In an eighteenth aspect, an embodiment of the present disclosure provides a computer-readable storage medium for storing instructions used for the second terminal, and when the instructions are executed, the second terminal is caused to perform the method for determining the sidelink-based PRS resource in the second aspect.

In a nineteenth aspect, an embodiment of the present disclosure provides a computer-readable storage medium for storing instructions used for the network device, and when the instructions are executed, the network device is caused to perform the method for determining the sidelink-based PRS resource described in the third aspect.

In a twentieth aspect, the present disclosure also provides a computer program product including a computer program, which, when run on a computer, causes the computer to perform the method for determining the sidelink-based PRS resource in the first aspect.

In a twenty-first aspect, the present disclosure also provides a computer program product including a computer program, which, when run on a computer, causes the computer to perform the method for determining the sidelink-based PRS resource described in the second aspect.

In a twenty-second aspect, the present disclosure also provides a computer program product including a computer program, which, when run on a computer, causes the computer to perform the method for determining the sidelink-based PRS resource described in the third aspect.

In a twenty-third aspect, the present disclosure provides a chip system, which includes at least one processor and an interface, for supporting the first terminal to realize the functions related to the first aspect, for example, determining or processing at least one of data and information related to the above method.

In a possible design, the chip system further includes a memory for storing necessary computer programs and data of the first terminal. The chip system may include chips, and may also include chips and other discrete devices.

In a twenty-fourth aspect, the present disclosure provides a chip system, which includes at least one processor and an interface, for supporting the second terminal to realize the functions related to the second aspect, for example, determining or processing at least one of data and information related to the above method.

In a possible design, the chip system further includes a memory for storing necessary computer programs and data of the second terminal. The chip system may include chips, and may also include chips and other discrete devices.

In a twenty-fifth aspect, the present disclosure provides a chip system, which includes at least one processor and an interface, for supporting the network device to realize the functions related to the third aspect, for example, determining or processing at least one of data and information related to the above method.

In a possible design, the chip system further includes a memory for storing necessary computer programs and data of the network device. The chip system may include chips, and may also include chips and other discrete devices. In a twenty-sixth aspect, the present disclosure provides a computer program which, when run on a computer, causes the computer to perform the method for determining the sidelink-based PRS resource described in the first aspect.

In a twenty-seventh aspect, the present disclosure provides a computer program which, when run on a computer, causes the computer to perform the method for determining the sidelink-based PRS resource described in the second aspect.

In a twenty-eighth aspect, the present disclosure provides a computer program which, when run on a computer, causes the computer to perform the method for determining the sidelink-based PRS resource described in the third aspect.

To sum up, the method and the apparatus for determining the sidelink-based PRS resource, the device, the chip system, the storage medium, the computer program and the computer program product provided by the embodiments of the present disclosure may achieve the following technical effects.

The first terminal initiates the SL positioning, and transmits the indication information to the second terminal, in which the indication information is configured to instruct the second terminal to determine the resource for determining the SL PRS, and/or transmits the indication information to the network device, in which the indication information is configured to instruct the network device to determine the resource for determining the SL PRS. Therefore, the UE participating in the SL positioning and/or the network device responsible for resource allocation in the SL positioning may effectively determine the resources for transmitting the SL PRS based on the indication information, thus effectively improving the positioning effect of the sidelink SL.

### BRIEF DESCRIPTION OF THE DRAWINGS

In order to more clearly explain the technical scheme in the embodiments of the present disclosure or the related art, the drawings needed in the embodiments of the present disclosure or the related art will be explained below.
Fig. 1 is a schematic diagram of an architecture of a communication system according to an embodiment of the present disclosure.
Fig. 2a is a flow chart of a method for determining a sidelink-based positioning reference signal (PRS) resource according to an embodiment of the present disclosure.
Fig. 2b is a flow chart of a method for determining a sidelink-based positioning reference signal (PRS) resource according to an embodiment of the present disclosure.
Fig. 2c is a flow chart of a method for determining a sidelink-based positioning reference signal (PRS) resource according to an embodiment of the present disclosure.
Fig. 3a is a flow chart of a method for determining a sidelink-based positioning reference signal (PRS) resource according to an embodiment of the present disclosure.
Fig. 3b is a schematic diagram showing an interaction of a method for determining a sidelink-based positioning reference signal (PRS) resource according to an embodiment of the present disclosure.
Fig. 4a is a flow chart of a method for determining a sidelink-based positioning reference signal (PRS) resource according to an embodiment of the present disclosure.
Fig. 4b is a schematic diagram showing an interaction of a method for determining a sidelink-based positioning reference signal (PRS) resource according to an embodiment of the present disclosure.
Fig. 4c is a schematic diagram showing an interaction of a method for determining a sidelink-based positioning reference signal (PRS) resource according to an embodiment of the present disclosure.
Fig. 5 is a flow chart of another method for determining a sidelink-based positioning reference signal (PRS) resource according to an embodiment of the present disclosure.
Fig. 6a is a flow chart of another method for determining a sidelink-based positioning reference signal (PRS) resource according to an embodiment of the present disclosure.
Fig. 6b is a schematic diagram showing an interaction of a method for determining a sidelink-based positioning reference signal (PRS) resource according to an embodiment of the present disclosure.
Fig. 6c is a schematic diagram showing an interaction of a method for determining a sidelink-based positioning reference signal (PRS) resource according to an embodiment of the present disclosure.
Fig. 7a is a flow chart of another method for determining a sidelink-based positioning reference signal (PRS) resource according to an embodiment of the present disclosure.
Fig. 7b is a schematic diagram showing an interaction of a method for determining a sidelink-based positioning reference signal (PRS) resource according to an embodiment of the present disclosure.
Fig. 8 is a flow chart of another method for determining a sidelink-based positioning reference signal (PRS) resource according to an embodiment of the present disclosure.
Fig. 9a is a flow chart of another method for determining a sidelink-based positioning reference signal (PRS) resource according to an embodiment of the present disclosure.
Fig. 9b is a schematic diagram showing an interaction of a method for determining a sidelink-based positioning reference signal (PRS) resource according to an embodiment of the present disclosure.
Fig. 9c is a schematic diagram showing an interaction of a method for determining a sidelink-based positioning reference signal (PRS) resource according to an embodiment of the present disclosure.
Fig. 10 is a schematic diagram of a communication device according to an embodiment of the present disclosure.
Fig. 11 is a schematic diagram of another communication device according to an embodiment of the present disclosure.
Fig. 12 is a schematic diagram of a chip according to an embodiment of the present disclosure.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all the implementations consistent with the embodiments of the present disclosure. Rather, they are merely examples of devices and methods consistent with some aspects of embodiments of the present disclosure as detailed in the appended claims.

The terms used in the embodiments of the present disclosure are for the purpose of describing specific embodiments only, and are not intended to limit the embodiments of the present disclosure. The singular forms "a" and "the" used in the embodiments of the present disclosure and the appended claims are also intended to include the plural forms, unless the context clearly indicates otherwise. It should also be understood that the term "and/or" as used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be called the second information, and similarly, the second information may also be called the first information. Depending on the context, the term "if" as used herein may be interpreted as "when" or "as" or "in response to determining ...... ".

In order to facilitate understanding, the terms involved in the present disclosure are first introduced.
1. Sidelink: a technology in which a terminal directly establishes a connection with another terminal by using new ratio (NR) spectrum resources and access technologies, so as to perform application-layer data transmission.
2. Radio resource control (RRC) refers to the management, control and scheduling of radio resources through set strategies and means. Under the condition of meeting the quality of service requirements, the limited radio network resources are fully utilized as much as possible, so as to ensure the planned coverage area, and to improve the service capacity and resource utilization rate are improved as much as possible.

In order to better understand a method for determining a sidelink-based positioning reference signal (PRS) resource disclosed in the embodiments of the present disclosure, a communication system to which the embodiments of the present disclosure are applicable will be described below.

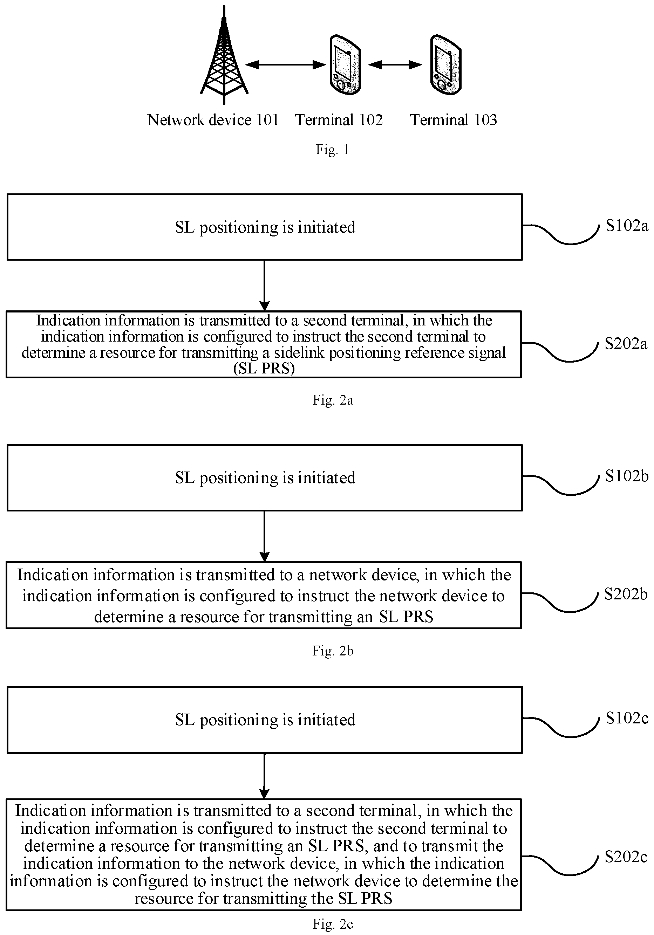

Referring to Fig. 1, Fig. 1 is a schematic diagram of an architecture of a communication system according to an embodiment of the present disclosure. The communication system may include, but is not limited to, one network device and two terminals. The number and form of devices shown in Fig. 1 are only illustrative and do not constitute a limitation to the embodiments of the present disclosure. In practical applications, two or more network devices and one or more terminals may be included. The communication system shown in Fig. 1 is illustrated as including one network device 101 and two terminals 102 and 103.

It should be noted that the technical scheme in the embodiments of the present disclosure may be applied to various communication systems. For example: a long term evolution (LTE) system, a 5th generation (5G) mobile communication system, a 5G new radio (NR) system, or other new mobile communication systems in the future.

The network device 101 in the embodiments of the present disclosure is an entity on a network side for transmitting or receiving signals. For example, the network device 101 may be an evolved NodeB (eNB), a transmission reception point (TRP), a next generation NodeB (gNB) in the NR system, a base station in other future mobile communication systems or an access node in a wireless fidelity (WiFi) system. The embodiments of the present disclosure do not limit the specific technology and the specific device form adopted by the network device.

The network device provided by the embodiments of the present disclosure may include a central unit (CU) and a distributed unit (DU), in which CU may also be called a control unit. With the CU-DU structure, the protocol layers of the network device, such as the base station, may be separated, and functions of some protocol layers are centrally controlled by the CU, while functions of some or all of the remaining protocol layers are distributed in the DUs, and the DUs are centrally controlled by the CU.

The terminals 102 and 103 in the embodiments of the present disclosure are entities on a user side for receiving or transmitting signals, such as mobile phones. The terminal may also be called a terminal device, user equipment (UE), a mobile station (MS), a mobile terminal (MT) and so on. The terminal may be a vehicle with a communication function, a smart vehicle, a mobile phone, a wearable device, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc.

The embodiments of the present disclosure do not limit the specific technology and the specific device form adopted by the terminal.

It may be understood that the communication system described in the embodiments of the present disclosure is for more clearly explaining the technical scheme in the embodiments of the present disclosure, and does not constitute a limitation on the technical scheme provided by the embodiments of the present disclosure. Those skilled in the art know that with the evolution of the system architecture and the emergence of new business scenarios, the technical scheme provided by the embodiments of the present disclosure is also applicable to similar technical problems.

In the following, the method and apparatus for determining the sidelink-based positioning reference signal (PRS) resource provided by the present disclosure are introduced in detail with the accompanying drawings. Fig. 2a is a flow chart of a method for determining a sidelink-based positioning reference signal (PRS) resource according to an embodiment of the present disclosure, and the method is performed by a first terminal.

As shown in Fig. 2a, the method may include, but is not limited to, the following steps.

In step S102a, SL positioning is initiated.

A terminal that initiates the SL positioning may be called the first terminal, and the first terminal may be one of a target UE, an anchor UE and an assistant UE, which is not limited here.

In this embodiment of the present disclosure, the second terminal is a terminal that performs the SL positioning, that is, the terminal (e.g., UE) that participates in the SL positioning may be called the second terminal, and the second terminal may be one of the target UE, the anchor UE and the assistant UE. The types of the first terminal and the second terminal may be the same or different, which is not limited here.

For example, the number of the second terminals participating in the SL positioning may be one or more, and the second terminal is a terminal to transmit the SL PRS. The second terminal to transmit the SL PRS may be determined by the first terminal based on a specific SL positioning method, which is not limited here.

For example, in a ranging method, both terminals involved in ranging usually need to transmit the SL PRS. In a SL TDOA method, the anchor UE usually needs to transmit the SL PRS. In a SL AOA method, the target UE usually needs to transmit the SL PRS. In addition, when the assistant UE participates in the SL positioning, the assistant UE also needs to transmit the SL PRS.

In step S202a, indication information is transmitted to a second terminal, in which the indication information is configured to instruct the second terminal to determine a resource for transmitting a sidelink positioning reference signal (SL PRS).

The resource for transmitting the SL PRS may include time-frequency domain resources, and information for indicating the resource for transmitting the SL PRS may be called the indication information.

In the SL positioning, the resource for the sidelink positioning reference signal (SL PRS) (such as the time-frequency domain resources for transmitting the SL PRS) has a great relationship with quality of service (QoS) requirements. However, only the UE that initiates the SL positioning is clear about the QoS requirements. In this embodiment of the present disclosure, when the first terminal initiates the SL positioning, the first terminal may transmit the indication information to the second terminal, in which the indication information is configured to instruct the second terminal to determine the resource for transmitting the sidelink positioning reference signal (SL PRS).

In this embodiment, the first terminal initiates the SL positioning, and transmits the indication information to the second terminal, in which the indication information is configured to instruct the second terminal to determine the resource for transmitting the SL PRS, so that the UE participating in the SL positioning may effectively determine the resource for transmitting the SL PRS based on the indication information, thus effectively improving the positioning effect of the sidelink (SL).

Fig. 2b is a flow chart of a method for determining a sidelink-based positioning reference signal (PRS) resource according to an embodiment of the present disclosure, and the method is performed by a first terminal.

As shown in Fig. 2b, the method may include, but is not limited to, the following steps.

In step S102b, SL positioning is initiated.

In step S202b, indication information is transmitted to a network device, in which the indication information is configured to instruct the network device to determine a resource for transmitting an SL PRS.

In the SL positioning, the network device may be responsible for resource allocation, or may also transmit the SL PRS to support the SL positioning.

In the SL positioning, the resource for the sidelink positioning reference signal (SL PRS) (such as time-frequency domain resources for transmitting the SL PRS) has a great relationship with quality of service (QoS) requirements. However, only the UE that initiates the SL positioning is clear about the QoS requirements. In this embodiment of the present disclosure, when the first terminal initiates the SL positioning, the first terminal may transmit the indication information to the network device, in which the indication information is configured to instruct the network device to determine the resource for transmitting the sidelink positioning reference signal (SL PRS).

In some positioning scenarios, the network device may transmit a positioning request to the first terminal, then the first terminal may determine the sidelink positioning method indicated by the network device based on the positioning request, and then the first terminal initiates the SL positioning based on the sidelink positioning method. The first terminal may transmit the indication information to the network device, so as to instruct the network device to be responsible for the resource allocation in the SL positioning (for example, allocating resources to any other possible UE involved in the SL positioning), or to instruct the network device to determine the resource required by the network device to transmit the SL PRS (for supporting the SL positioning), which is not limited here.

In some positioning scenarios, the first terminal may trigger the initiation of the SL positioning, and then the first terminal may transmit the indication information to the network device, so as to instruct the network device to be responsible for the resource allocation in the SL positioning, or to instruct the network device to determine the resource required by the network device to transmit the SL PRS (for supporting the SL positioning), which is not limited here.

In some embodiments of the present disclosure, the network device may be a base station or a core network, such as a location management function.

In this embodiment, the first terminal initiates the SL positioning, and transmits the indication information to the network device, in which the indication information is configured to instruct the network device to determine the resource for transmitting the SL PRS, so that the network device may effectively determine the resource for transmitting the SL PRS based on the indication information, thus effectively improving the positioning effect of the sidelink.

It may be understood that in some possible embodiments, the first terminal may initiate the SL positioning first, and then transmit the indication information to the network device to instruct the network device to determine the resource for transmitting the SL PRS. However, the order of initiating the SL positioning and transmitting the indication information to the network device to instruct the network device to determine the resource for transmitting the SL PRS may be adjusted as required, for example, the two steps may be performed simultaneously, or the indication information may be transmitted first, and then the sidelink positioning is initiated.

Fig. 2c is a flow chart of a method for determining a sidelink-based positioning reference signal (PRS) resource according to an embodiment of the present disclosure, and the method is performed by a first terminal.

As shown in Fig. 2c, the method may include, but is not limited to, the following steps.

In step S102c, SL positioning is initiated.

In step S202c, indication information is transmitted to a second terminal, in which the indication information is configured to instruct the second terminal to determine a resource for transmitting an SL PRS, and to transmit the indication information to the network device, in which the indication information is configured to instruct the network device to determine the resource for transmitting the SL PRS.

That is, in this embodiment of the present disclosure, the first terminal is supported to transmit the indication information to the second terminal and the network device, so as to instruct the second terminal and the network device to determine the resources for transmitting the SL PRS.

The indication information transmitted to the second terminal is configured to instruct the second terminal to determine the resource required by the second terminal to transmit the SL PRS, while the indication information transmitted to the network device is configured to instruct the network device to determine the resource required by the network device to transmit the SL PRS, or to instruct the network device to be responsible for resource allocation in the SL positioning process, which is not limited here.

For example, the first terminal may transmit the indication information to the second terminal and the network device, and the specific transmitting method may be determined according to the actual situation of the SL positioning, which is not limited here.

In this embodiment of the present disclosure, the second terminal and/or the network device may determine the resource for transmitting the SL PRS based on the indication information transmitted by the first terminal, which is not limited here.

In this embodiment, the first terminal initiates the SL positioning, and transmits the indication information to the second terminal and the network device, in which the indication information is configured to instruct the second terminal and the network device to determine the resources for transmitting the SL PRS, so that the UE participating in the SL positioning and the network device responsible for resource allocation in the SL positioning may effectively determine the resources for transmitting the SL PRS based on the indication information, thus effectively improving the SL positioning.

In the method for determining the sidelink-based positioning reference signal (PRS) resource provided in this embodiment of the present disclosure, the indication information includes at least one of: sidelink location service quality of service (LCS QoS) information; and SL PRS configuration information, thus effectively improving the indication comprehensiveness and indication effect of the indication information.

The LCS QoS information may be used to describe the QoS requirements related to the SL positioning, while the SL PRS configuration information may be used to configure the SL PRS.

In the method for determining the sidelink-based positioning reference signal (PRS) resource provided in this embodiment of the present disclosure, the LCS QoS information includes one or more of an LCS QoS class, an LCS QoS accuracy, an LCS QoS response time, an LCS QoS distance range parameter, a request vertical coordinate, a request speed, a request distance, a request angle, a request relative position, a request absolute position and a request zenith angle, so that the indication comprehensiveness of the LCS QoS information may be effectively improved.

For example, the LCS QoS class may be, for example, a best effort class, a multiple QoS class, and an assured QoS class, which is not limited here.

For example, the LCS QoS accuracy may be, for example, a horizontal accuracy, a vertical accuracy, a distance accuracy, an azimuth accuracy and a zenith angle accuracy, which is not limited here.

For example, the LCS QoS response time may indicate a maximum response time between a location request and a location response, in seconds/milliseconds, and it may also be, for example, no delay, low delay and delay tolerant, which is not limited here.

For example, the LCS QoS distance range parameter (range parameter) indicates the distance requirements between the positioning UE and the positioned UE, such as the range parameter, which indicates that the accuracy requirement needs to be met within the distance range indicated by the range.

In some embodiments of the present disclosure, the network device may be a base station or a core network, such as a location management function.

In the method for determining the sidelink-based positioning reference signal (PRS) resource provided in this embodiment of the present disclosure, the SL PRS configuration information includes one or more of an SL PRS bandwidth, an SL PRS comb size, an SL PRS orthogonal frequency division multiplexing (OFDM) symbol number, an SL PRS subcarrier spacing, an SL PRS carrier frequency, an SL PRS time-frequency resource location, and a frequency hopping indication, in which the frequency hopping indication is used to indicate whether to hop a frequency, thereby effectively improving the indication comprehensiveness of the SL PRS configuration information and supporting the second terminal and/or the network device to select accurate resources for transmitting the SL PRS based on the SL PRS configuration information.

For example, the SL PRS bandwidth may indicate a bandwidth value or a bandwidth range of the SL PRS; the SL PRS comb size is the comb size of the SL PRS; the SL PRS OFDM symbol number is the OFDM symbol number of the SL PRS; the SL PRS subcarrier spacing is the subcarrier spacing (SCS) of the SL PRS; the SL PRS carrier frequency is the carrier frequency of the SL PRS; and the SL PRS time-frequency resource location is the time-frequency resource location of the SL PRS. The frequency hopping indication is used to indicate whether the frequency hops. The SL PRS comb size indicates a subcarrier density occupied in one SL PRS symbol.

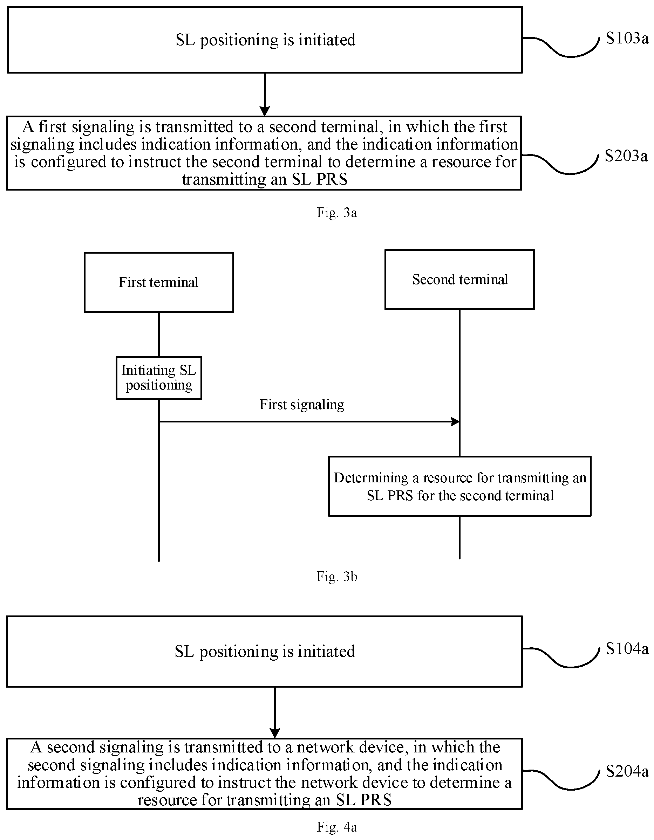

Fig. 3a is a flow chart of a method for determining a sidelink-based positioning reference signal (PRS) resource according to an embodiment of the present disclosure, and the method is performed by a first terminal.

As shown in Fig. 3a, the method may include, but is not limited to, the following steps.

In step S103a, SL positioning is initiated.

For the description of step S103a, reference may be made to the above embodiments in detail, which will not be repeated here.

In step S203a, a first signaling is transmitted to a second terminal, in which the first signaling includes indication information, and the indication information is configured to instruct the second terminal to determine a resource for transmitting an SL PRS.

In this the embodiment of the present disclosure, the first signaling may include one or more of a sidelink positioning protocol (SLPP) signaling and a ranging and sidelink positioning protocol (RSPP) signaling, so as to may effectively improve the flexibility of transmitting the indication information, so that the method for determining the sidelink-based PRS resource may be effectively applicable to diverse SL positioning scenarios.

In this embodiment of the present disclosure, the SLPP signaling includes: a first message providing assistant information, and the first message providing assistant information includes the indication information, and/or the RSPP signaling includes a second message providing assistant information, and the second message providing assistant information includes the indication information. That is, the message providing assistant information may carry the indication information to transmit the indication information to the second terminal based on the SLPP signaling and/or the RSPP signaling.

The message providing assistant information contained in the SLPP signaling transmitted to the second terminal may be called the first message providing assistant information, and the message providing assistant information contained in the RSPP signaling transmitted to the second terminal may be called the second message providing assistant information.

As shown in Fig. 3b, Fig. 3b is a schematic diagram showing an interaction of a method for determining a sidelink-based positioning reference signal (PRS) resource according to an embodiment of the present disclosure. The first terminal may initiate the SL positioning, and transmit the first signaling to the second terminal, so as to instruct the second terminal to determine the resource for the second terminal to transmit the SL PRS based on the indication information in the first signaling.

In this embodiment, the first terminal initiates the SL positioning, and transmits the first signaling to the second terminal. The first signaling includes the indication information, and the indication information is configured to instruct the second terminal to determine the resource for transmitting the SL PRS, so that the UE participating in the SL positioning may effectively determine the resource for transmitting the SL PRS based on the indication information, thus effectively improving the positioning effect of the sidelink. Transmitting the indication information to the second terminal by transmitting the signaling may effectively reduce the indication overhead and improve the indication security.

In the method for determining the sidelink-based positioning reference signal (PRS) resource provided in this embodiment of the present disclosure, the first terminal is in an out-of-coverage state, and the second terminal is in the out-of-coverage state or in an in-coverage state, thus effectively improving the transmitting effect of the indication information.

Fig. 4a is a flow chart of a method for determining a sidelink-based positioning reference signal (PRS) resource according to an embodiment of the present disclosure, and the method is performed by a first terminal.

As shown in Fig. 4a, the method may include, but is not limited to, the following steps.

In step S104a, SL positioning is initiated.

For the description of step S 104a, reference may be made to the above embodiments in detail, which will not be repeated here.

In step S204a, a second signaling is transmitted to a network device, in which the second signaling includes indication information, and the indication information is configured to instruct the network device to determine a resource for transmitting an SL PRS.

For example, the network device may analyze the indication information from the second signaling transmitted by the first terminal, so as to select the resource for transmitting the SL PRS based on the indication information. The resource selected by the network device for transmitting the SL PRS may be used for the network device to directly transmit the SL PRS, or may also be the resource configured by the network device for other terminals participating in the SL positioning to transmit the SL PRS, which is not limited here.

In some embodiments of the present disclosure, the network device may be a base station or a core network, such as a location management function.

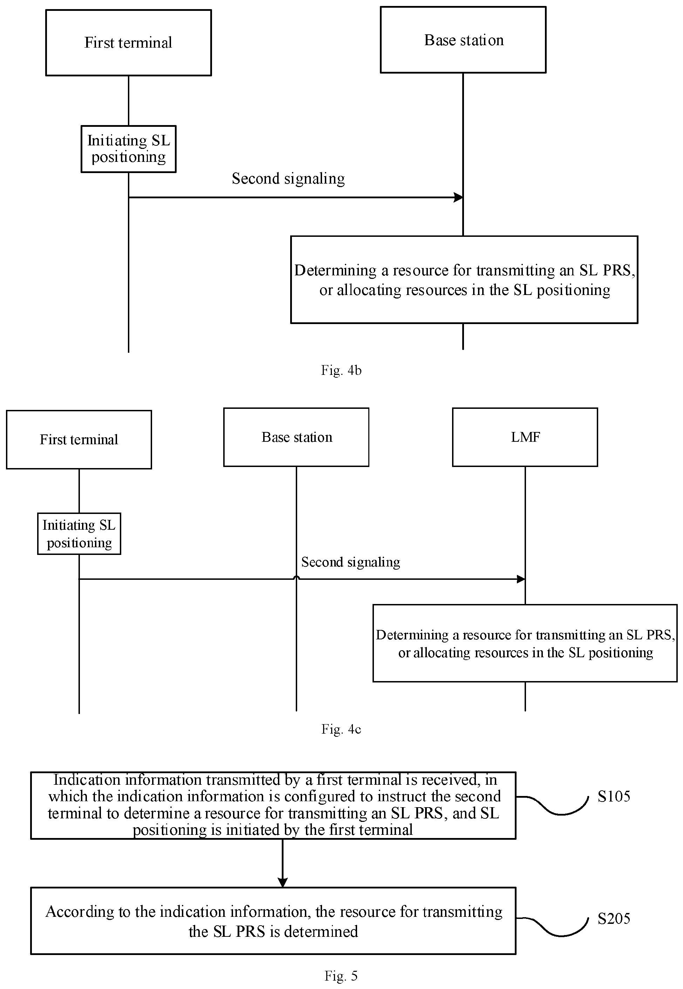

As shown in Fig. 4b, Fig. 4b is a schematic diagram showing an interaction of a method for determining a sidelink-based positioning reference signal (PRS) resource according to an embodiment of the present disclosure. The first terminal may initiate the SL positioning and transmit the second signaling to the base station, so as to instruct the base station to allocate resources during the SL positioning, or to determine the resource for transmitting the SL PRS based on the indication information in the second signaling.

As shown in Fig. 4c, Fig. 4c is a schematic diagram showing an interaction of a method for determining a sidelink-based positioning reference signal (PRS) resource according to an embodiment of the present disclosure. The first terminal may initiate the SL positioning, and transmit the second signaling to the location management function (LMF) through the transparent transmission of the base station, so as to instruct the LMF to allocate resources during the SL positioning, or to determine the resource for transmitting the SL PRS based on the indication information in the second signaling.

In this embodiment, the first terminal initiates the SL positioning, and transmits the second signaling to the network device. The second signaling includes the indication information, and the indication information is configured to instruct the network device to determine the resource for transmitting the SL PRS, so that the network device may effectively determine the resource for transmitting the SL PRS based on the indication information, thus effectively improving the positioning effect of the sidelink. Transmitting the indication information to the network device by transmitting the signaling may effectively reduce the indication overhead and improve the indication security.

In some embodiments of the present disclosure, the network device may be a base station or a core network, such as a location management function (LMF).

In some embodiments of the present disclosure, in a case that the network device is the base station, the second signaling at least includes a radio resource control (RRC) message.

In some embodiments of the present disclosure, in a case that the network device is the location management function (LMF), the second signaling includes one or more of a sidelink positioning protocol (SLPP) signaling, a ranging and sidelink positioning protocol (RSPP) signaling, and a long term evolution (LTE) positioning protocol (LPP) signaling, so as to effectively improve the flexibility of transmitting the indication information, so that the method for determining the sidelink-based positioning reference signal (PRS) resource may be effectively applicable to diverse SL positioning scenarios.

In this embodiment of the present disclosure, the SLPP signaling includes a third message providing assistant information, and the third message providing assistant information includes the indication information, and/or the RSPP signaling includes a fourth message providing assistant information, and the fourth message providing assistant information includes the indication information, and/or the LPP signaling includes a fifth message providing assistant information, and the fifth message providing assistant information includes the indication information. That is, the message providing assistant information carries the indication information to transmit the indication information to the second terminal based on the SLPP signaling, the RSPP signaling, and/or the LPP signaling.

The message providing assistant information contained in the SLPP signaling transmitted to the network device may be called the third message providing assistant information. The message providing assistant information contained in the RSPP signaling transmitted to the network device may be called the fourth message providing assistant information. The message providing assistant information contained in the LPP signaling transmitted to the network device may be called the fifth message providing assistant information.

It may be noted that in the following embodiments, for descriptions of the same or corresponding terms and method steps as those in the above embodiments, reference may be made to the above embodiments together, which will not be repeated here.

Fig. 5 is a flow chart of another method for determining a sidelink-based positioning reference signal (PRS) resource according to an embodiment of the present disclosure, and the method is performed by a second terminal. The UE participating in the SL positioning may be called the second terminal, and the second terminal may be one of a target UE, an anchor UE and an assistant UE, which is not limited here.

As shown in Fig. 5, the method may include, but is not limited to, the following steps.

In step S105, indication information transmitted by a first terminal is received, in which the indication information is configured to instruct the second terminal to determine a resource for transmitting an SL PRS, and SL positioning is initiated by the first terminal.

In step S205, according to the indication information, the resource for transmitting the SL PRS is determined.

In this embodiment of the present disclosure, the second terminal may receive the indication information transmitted by the first terminal, and determine the resource for transmitting the SL PRS based on the indication information.

In this embodiment of the present disclosure, the second terminal may determine the resource for transmitting the SL PRS according to a resource allocation mode in which the second terminal is located, and then may also transmit the SL PRS based on the determined resource for transmitting the SL PRS, so as to support the SL positioning.

In this embodiment, the indication information transmitted by the first terminal is received, the indication information is configured to instruct the second terminal to determine the resource for transmitting the SL PRS, the SL positioning is initiated by the first terminal, and the resource for transmitting the SL PRS is determined according to the indication information, so that the UE participating in the SL positioning may effectively determine the resource for transmitting the SL PRS based on the indication information, thus effectively improving the positioning effect of the sidelink.

In the method for determining the sidelink-based PRS resource provided in this embodiment of the present disclosure, the indication information includes one or more of LCS QoS information and SL PRS configuration information.

In the method for determining the sidelink-based PRS resource provided in this embodiment of the present disclosure, the LCS QoS information includes one or more of an LCS QoS class, an LCS QoS accuracy, an LCS QoS response time, an LCS QoS distance range parameter, a request vertical coordinate, a request speed, a request distance, a request angle, a request relative position, a request absolute position and a request zenith angle, so that the indication comprehensiveness of the LCS QoS information may be effectively improved.

In the method for determining the sidelink-based PRS resource provided in this embodiment of the present disclosure, the SL PRS configuration information includes one or more of an SL PRS bandwidth, an SL PRS comb size, an SL PRS orthogonal frequency division multiplexing (OFDM) symbol number, an SL PRS subcarrier spacing, an SL PRS carrier frequency, an SL PRS time-frequency resource location, and a frequency hopping indication, in which the frequency hopping indication is used to indicate whether to hop a frequency.

In the method for determining the sidelink-based positioning reference signal (PRS) resource provided in this embodiment of the present disclosure, the second terminal may also receive a first signaling transmitted by the first terminal, and the first signaling includes the indication information, in which the first signaling includes one or more of a sidelink positioning protocol (SLPP) signaling and a ranging and sidelink positioning protocol (RSPP) signaling, so that the second terminal participating in the SL positioning may effectively determine the resource for transmitting the SL PRS based on the indication information. By receiving the indication information transmitted by the first terminal based on the signaling, the indication overhead may be effectively reduced, and the indication security may also be improved. It may also effectively improve the flexibility of transmitting the indication information, so that the method for determining the sidelink-based positioning reference signal (PRS) resource may be effectively applicable to diverse SL positioning scenarios.

In the method for determining the sidelink-based PRS resource provided in this embodiment of the present disclosure, the SLPP signaling includes a first message providing assistant information, and the first message providing assistant information includes the indication information; and/or the RSPP signaling includes a second message providing assistant information, and the second message providing assistant information includes the indication information. That is, the indication information may be carried by the message providing assistant information, so that the indication information transmitted by the first terminal is received based on the SLPP signaling and/or the RSPP signaling.

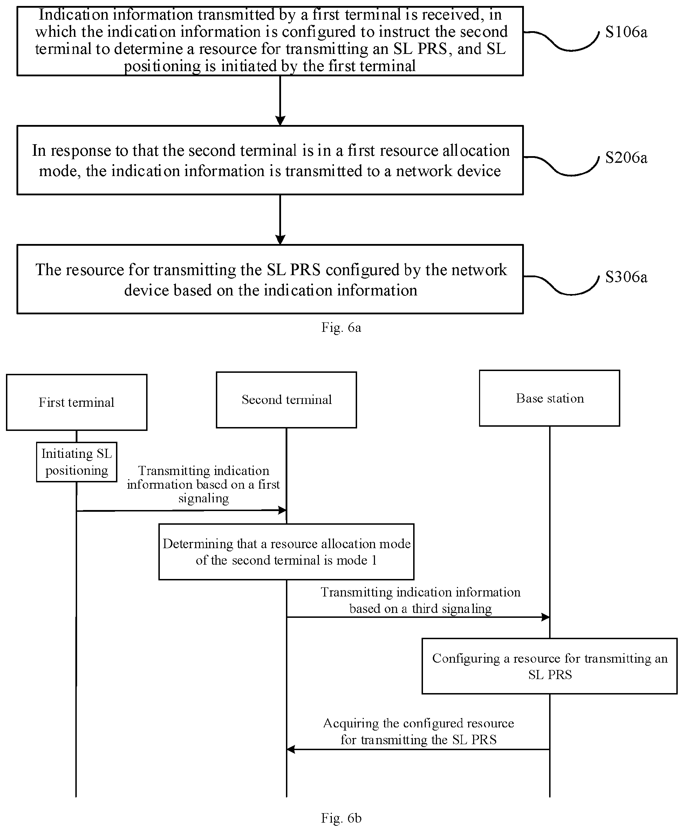

Fig. 6a is a flow chart of another method for determining a sidelink-based positioning reference signal (PRS) resource according to an embodiment of the present disclosure, and the method is performed by a second terminal.

As shown in Fig. 6a, the method may include, but is not limited to, the following steps.

In step S106a, indication information transmitted by a first terminal is received, in which the indication information is configured to instruct the second terminal to determine a resource for transmitting an SL PRS, and SL positioning is initiated by the first terminal.

In step S206a, in response to that the second terminal is in a first resource allocation mode, the indication information is transmitted to a network device.

There are two resource allocation modes in the sidelink (SL) communication method, one mode is a mode of network dynamic scheduling (namely, mode 1, a first resource allocation mode), and the other mode is a mode of UE's independent selection in a resource pool broadcast by the network (namely, mode 2, a second resource allocation mode). The mode of network dynamic scheduling means that the network device dynamically allocates the transmission resources on the sidelink (SL) to the UE according to the cached data reporting of the UE, while the mode of independent selection means that the UE randomly selects by itself the transmission resources in the resource pool broadcast or pre-configured by the network.

The second terminal may determine the resource allocation mode in which the second terminal is located based on the state (for example, an out-of-coverage state or an in-coverage state) where the second terminal is. When the second terminal is in the out-of-coverage state, the second terminal is in the second resource allocation mode. When the second terminal is in the-coverage state, the second terminal is in the first resource allocation mode. Or, the second terminal may also determine the resource allocation mode in which the second terminal is located based on the indication of the base station, which is not limited here.

In this embodiment of the present disclosure, the second terminal is supported to flexibly determine the resource for transmitting the SL PRS based on the resource allocation mode in which the second terminal is located.

In this embodiment of the present disclosure, a third signaling may be transmitted to the network device, and the third signaling includes the indication information. The third signaling includes one or more of a SidelinkUEInformationNR signaling, a sidelink positioning protocol (SLPP) signaling, a ranging and sidelink positioning protocol (RSPP) signaling, and a long term evolution (LTE) positioning protocol (LPP) signaling, thus realizing flexible forwarding of the indication information to the network device.

For example, in a case that the second terminal determines that it is in the first resource allocation mode, it may transmit one or more of the SidelinkUEInformationNR signaling, the SLPP signaling, the RSPP signaling, and the LPP signaling to the base station or the location management function (LMF). The SLPP signaling, the RSPP signaling, and the LPP signaling may respectively include a message providing assistant information, and the message providing assistant information may carry the indication information, so as to realize the forwarding of the indication information from the second terminal to the network device.

In step S306a, the resource for transmitting the SL PRS configured by the network device based on the indication information.

For example, when the second terminal is determined to be in the first resource allocation mode, it may transmit the indication information to the network device, and then the network device configures the resource for the second terminal to transmit the SL PRS based on the indication information, so that the second terminal may acquire the resource for transmitting the SL PRS configured by the network device, so as to transmit the SL PRS.

In this embodiment, the indication information transmitted by the first terminal is received, the indication information is configured to instruct the second terminal to determine the resource for transmitting the SL PRS, the SL positioning is initiated by the first terminal, the indication information is transmitted to the network device in response to that the second terminal is in the first resource allocation mode, and the resource for transmitting the SL PRS configured by the network device is acquired, so that the UE participating in the SL positioning may effectively determine the resource for transmitting the SL PRS based on the indication information, thus effectively improving the positioning effect of the sidelink (SL). Moreover, the second terminal is supported to flexibly determine the resource for transmitting the SL PRS based on the resource allocation mode in which the second terminal is located. When it is determined that the second terminal supports the first resource allocation mode, the resource for transmitting the SL PRS configured by the network device is acquired, in which the resource for transmitting the SL PRS is determined by the indication information, so that the resource for transmitting the SL PRS may be acquired in time.

As shown in Fig. 6b, Fig. 6b is a schematic diagram showing an interaction of a method for determining a sidelink-based positioning reference signal (PRS) resource according to an embodiment of the present disclosure. That is, the first terminal initiates the SL positioning, and transmits the indication information to the second terminal based on the first signaling. Then, after receiving the indication information transmitted by the first terminal, the second terminal may judge the resource allocation mode in which it is located. In a case that the second terminal is in the first resource allocation mode (mode 1 of network dynamic scheduling), the second terminal may transmit the indication information to the base station based on the third signaling, and the base station allocates the time-frequency domain resources for the second terminal, which is not limited here.

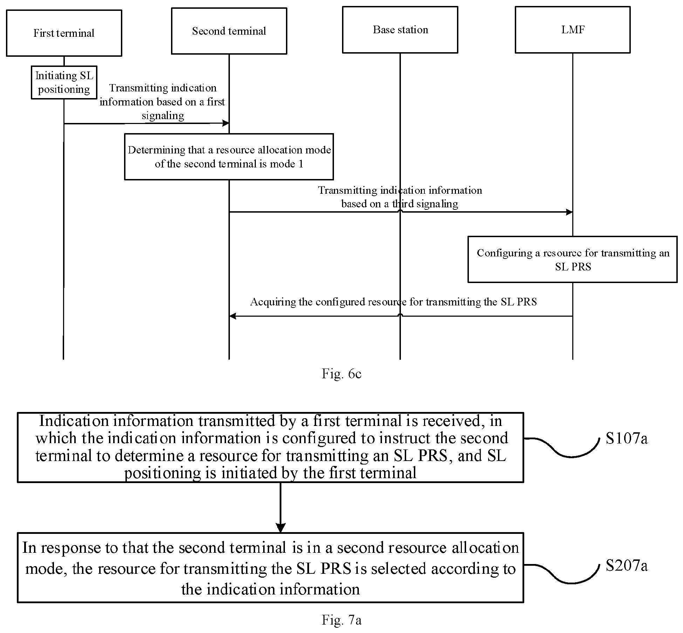

As shown in Fig. 6c, Fig. 6c is a schematic diagram showing an interaction of a method for determining a sidelink-based positioning reference signal (PRS) resource according to an embodiment of the present disclosure. That is, the first terminal initiates the SL positioning, and transmits the indication information to the second terminal based on the first signaling. Then, after receiving the indication information transmitted by the first terminal, the second terminal may judge the resource allocation mode in which it is located. In a case that the second terminal is in the first resource allocation mode (mode 1 of network dynamic scheduling), the second terminal may also transmit the indication information to the location management function (LMF) based on the third signaling, and the LMF allocates the time-frequency domain resources for the second terminal, which is not limited here.

Fig. 7a is a flow chart of another method for determining a sidelink-based positioning reference signal (PRS) resource according to an embodiment of the present disclosure, and the method is performed by a second terminal.

As shown in Fig. 7a, the method may include, but is not limited to, the following steps.

In step S107a, indication information transmitted by a first terminal is received, in which the indication information is configured to instruct the second terminal to determine a resource for transmitting an SL PRS, and SL positioning is initiated by the first terminal.

In step S207a, in response to that the second terminal is in a second resource allocation mode, the resource for transmitting the SL PRS is selected according to the indication information.

For example, in a case that the second terminal determines that it is in the second resource allocation mode, it may randomly select by itself the resource for transmitting the SL PRS in a resource pool broadcast or preconfigured by the network.

In this embodiment, the UE participating in the SL positioning may effectively determine the resource for transmitting the SL PRS based on the indication information, thus effectively improving the positioning effect of the sidelink (SL). When the second terminal determines that it supports the second resource allocation mode, the resource for transmitting the SL PRS is selected according to the indication information, so that the resource for transmitting the SL PRS may be selected in time.

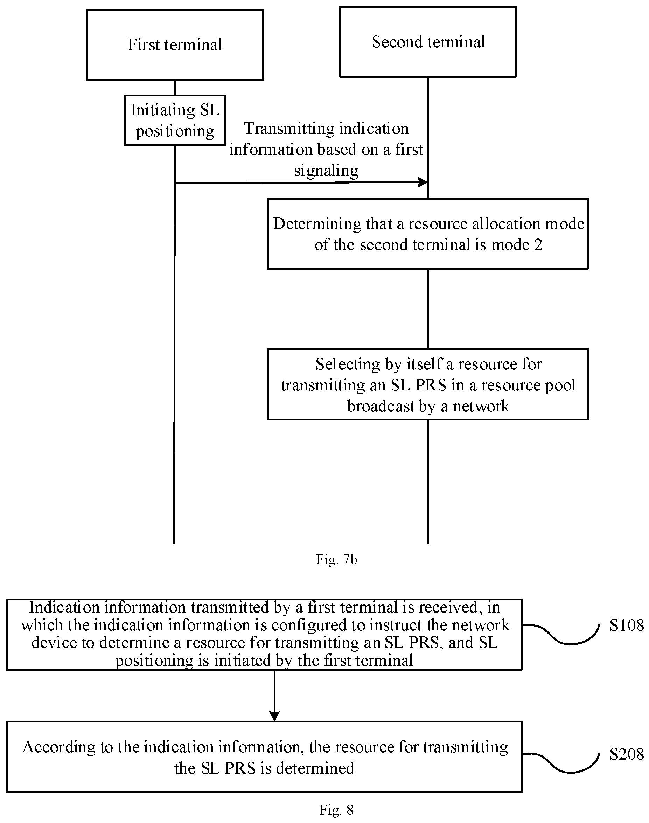

As shown in Fig. 7b, Fig. 7b is a schematic diagram showing an interaction of a method for determining a sidelink-based positioning reference signal (PRS) resource according to an embodiment of the present disclosure. That is, the first terminal initiates the SL positioning, and transmits the indication information to the second terminal based on the first signaling. Then, after receiving the indication information transmitted by the first terminal, the second terminal may judge the resource allocation mode in which it is located. In a case that the second terminal is in the second resource allocation mode (mode 2), the second terminal may independently select the resource for transmitting the SL PRS from a resource pool broadcast by the network, which is not limited here.

In the method for determining the sidelink-based positioning reference signal (PRS) resource provided in this embodiment of the present disclosure, the first terminal is in an out-of-coverage state, and the second terminal is in the out-of-coverage state or an in-coverage state, thus effectively improving the transmitting effect of the indication information.

Fig. 8 is a flow chart of another method for determining a sidelink-based positioning reference signal (PRS) resource according to an embodiment of the present disclosure, the method is performed by a network device.

As shown in Fig. 8, the method may include, but is not limited to, the following steps.

In step S108, indication information transmitted by a first terminal is received, in which the indication information is configured to instruct the network device to determine a resource for transmitting an SL PRS, and SL positioning is initiated by the first terminal.

In step S208, according to the indication information, the resource for transmitting the SL PRS is determined.

For example, the resource determined by the network device to transmit the SL PRS may be used for the network device to transmit the SL PRS directly. In other embodiments, the network device may also configure the resources for transmitting the SL PRS for other terminals participating in the SL positioning, so that the configured resources for transmitting the SL PRS may support other terminals participating in the SL positioning to transmit the SL PRS, which is not limited here.

In this embodiment, the indication information transmitted by the first terminal is received, the indication information is configured to instruct the network device to determine the resource for transmitting the SL PRS, the SL positioning is initiated by the first terminal, and the resource for transmitting the SL PRS is determined according to the indication information, so that the network device may effectively determine the resource for transmitting the SL PRS based on the indication information, thus effectively improving the positioning effect of the sidelink.

In the method for determining the sidelink-based PRS resource provided in this embodiment of the present disclosure, the indication information includes at least one of: LCS QoS information; and SL PRS configuration information.

In the method for determining the sidelink-based PRS resource provided in this embodiment of the present disclosure, the LCS QoS information includes one or more of an LCS QoS class, an LCS QoS accuracy, an LCS QoS response time, an LCS QoS distance range parameter, a request vertical coordinate, a request speed, a request distance, a request angle, a request relative position, a request absolute position and a request zenith angle, so that the indication comprehensiveness of the LCS QoS information may be effectively improved.

In the method for determining the sidelink-based PRS resource provided in this embodiment of the present disclosure, the SL PRS configuration information includes one or more of an SL PRS bandwidth, an SL PRS comb size, an SL PRS orthogonal frequency division multiplexing (OFDM) symbol number, an SL PRS subcarrier spacing, an SL PRS carrier frequency, an SL PRS time-frequency resource location, and a frequency hopping indication, in which the frequency hopping indication is used to indicate whether to hop a frequency.

In the method for determining the sidelink-based PRS resource provided in this embodiment of the present disclosure, the method further includes: receiving a second signaling transmitted by the first terminal, and the second signaling includes the indication information. In a case that the network device is a base station, the second signaling at least includes a radio resource control (RRC) message. In a case that the network device is a location management function (LMF), the second signaling includes at least one of a sidelink positioning protocol (SLPP) signaling; a ranging and sidelink positioning protocol (RSPP) signaling; and a long term evolution (LTE) positioning protocol (LPP) signaling.

In the method for determining the sidelink-based PRS resource provided in this embodiment of the present disclosure, the SLPP signaling includes a third message providing assistant information, and the third message providing assistant information includes the indication information; and/or the RSPP signaling includes a fourth message providing assistant information, and the fourth message providing assistant information includes the indication information; and/or the LPP signaling includes a fifth message providing assistant information, and the fifth message providing assistant information includes the indication information.

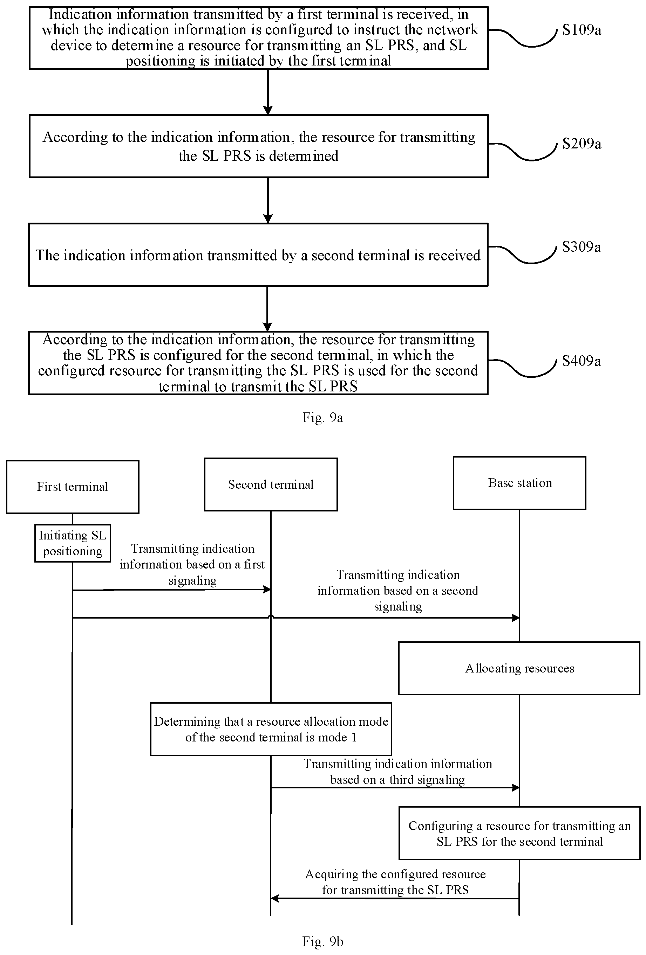

Fig. 9a is a flow chart of another method for determining a sidelink-based positioning reference signal (PRS) resource according to an embodiment of the present disclosure, and the method is performed by a network device.

As shown in Fig. 9a, the method may include, but is not limited to, the following steps.

In step S109a, indication information transmitted by a first terminal is received, in which the indication information is configured to instruct the network device to determine a resource for transmitting an SL PRS, and SL positioning is initiated by the first terminal.

In step S209a, according to the indication information, the resource for transmitting the SL PRS is determined.

For example, the resource determined by the network device to transmit the SL PRS may be used for the network device to transmit the SL PRS directly. In other embodiments, the network device may also configure the resources for transmitting the SL PRS for other terminals participating in the SL positioning, so that the configured resources for transmitting the SL PRS may support other terminals participating in the SL positioning to transmit the SL PRS, which is not limited here.

In step S309a, the indication information transmitted by a second terminal is received.

The indication information may be received by the second terminal from the first terminal and forwarded by the second terminal to the network device. When the second terminal determines that it is in the first resource allocation mode, it may forward the indication information to the network device, and the network device may receive the indication information transmitted by the second terminal.

In step S409a, according to the indication information, the resource for transmitting the SL PRS is configured for the second terminal, in which the configured resource for transmitting the SL PRS is used for the second terminal to transmit the SL PRS.

In this embodiment, the network device may effectively determine the resource for transmitting the SL PRS based on the indication information, thus effectively improving the positioning effect of the sidelink. The second terminal may also be configured with the resource for transmitting the SL PRS, and the configured resource for transmitting the SL PRS is used for the second terminal to transmit the SL PRS.

As shown in Fig. 9b, Fig. 9b is a schematic diagram showing an interaction of a method for determining a sidelink-based positioning reference signal (PRS) resource according to an embodiment of the present disclosure. That is, the first terminal initiates the SL positioning, transmits the indication information to the second terminal based on the first signaling, and transmits the indication information to the base station based on the second signaling. Then, after receiving the indication information transmitted by the first terminal, the second terminal may judge the resource allocation mode in which it is located. In a case that the second terminal is in the first resource allocation mode (mode 1 of network dynamic scheduling), the second terminal may also transmit the indication information to the base station based on the third signaling.

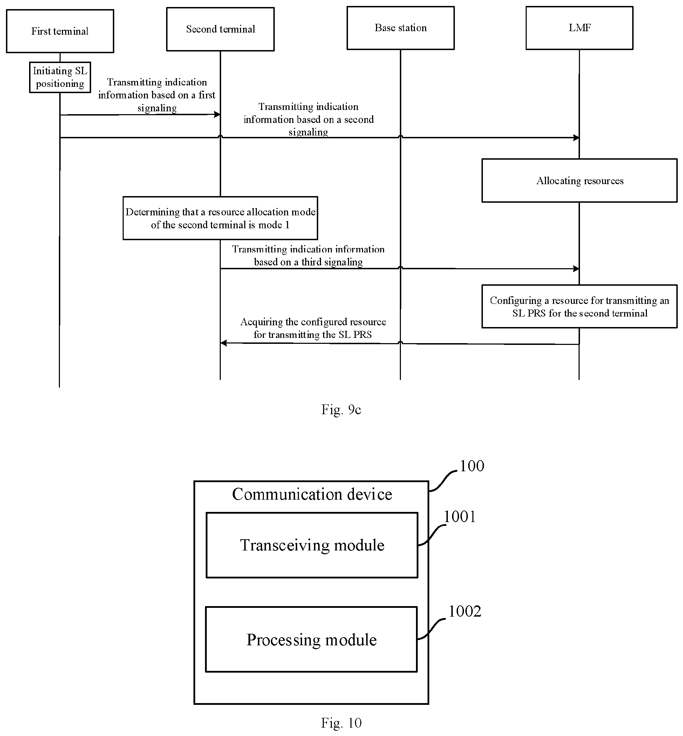

As shown in Fig. 9c, Fig. 9c is a schematic diagram showing an interaction of a method for determining a sidelink-based positioning reference signal (PRS) resource according to an embodiment of the present disclosure. That is, the first terminal initiates the SL positioning, transmits the indication information to the second terminal based on the first signaling, and transmits the indication information to the location management function (LMF) based on the second signaling. Then, after receiving the indication information transmitted by the first terminal, the second terminal may judge the resource allocation mode in which it is located. In a case that the second terminal is in the first resource allocation mode (mode 1 of network dynamic scheduling), the second terminal may also transmit the indication information to the location management function (LMF) based on the third signaling, and the location management function (LMF) allocates the time-frequency domain resources for the second terminal, which is not limited here.

In the method for determining the sidelink-based PRS resource provided in this embodiment of the present disclosure, receiving the indication information transmitted by the second terminal may be receiving the third signaling transmitted by the second terminal, and the third signaling includes the indication information. The third signaling includes at least one of: a SidelinkUEInformationNR signaling; an SLPP signaling; a RSPP signaling; and an LPP.

In the method for determining the sidelink-based positioning reference signal (PRS) resource provided in this embodiment of the present disclosure, the first terminal is in an out-of-coverage state, and the second terminal is in the out-of-coverage state or an in-coverage state.

Fig. 10 is a schematic diagram of a communication device 100 according to an embodiment of the present disclosure. The communication device 100 shown in Fig. 10 may include a transceiving module 1001 and a processing module 1002. The transceiving module 1001 may include a transmitting module and/or a receiving module, the transmitting module is configured to realize a transmitting function and the receiving module is configured to realize a receiving function, so that the transceiving module 1001 may realize the transmitting function and/or the receiving function.

The communication device 100 may be a terminal (such as the first terminal and the second terminal in the aforementioned method embodiments), a device in the terminal, or a device that may be used in combination with the terminal. Alternatively, the communication device 100 may be a network device (such as the network device in the aforementioned method embodiments), a device in the network device, or a device that may be used in combination with the network device.

The communication device 100, on the side of the first terminal, includes:
the processing module 1002 configured to initiate SL positioning; and
the transceiving module 1001 configured to: transmit indication information to a second terminal, in which the indication information is configured to instruct the second terminal to determine a resource for transmitting an SL PRS; and/or transmit indication information to a network device, in which the indication information is configured to instruct the network device to determine a resource for transmitting an SL PRS.

In some embodiments of the present disclosure, the indication information includes at least one of:
an LCS QoS information; and
an SL PRS configuration information.
In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position; and
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, in which the frequency hopping indication indicates whether to hop a frequency.
In some embodiments of the present disclosure, the second terminal is a terminal for performing the SL positioning.

In some embodiments of the present disclosure, transmitting the indication information to the second terminal includes:
transmitting a first signaling to the second terminal, in which the first signaling includes the indication information,
in which the first signaling includes at least one of:
a sidelink positioning protocol (SLPP) signaling; or
a ranging and sidelink positioning protocol (RSPP) signaling.
In some embodiments of the present disclosure,
the SLPP signaling includes a first message providing assistant information, and the first message providing assistant information includes the indication information; and/or
the RSPP signaling includes a second message providing assistant information, and the second message providing assistant information includes the indication information.

In some embodiments of the present disclosure, transmitting the indication information to the network device includes:
transmitting a second signaling to the network device, in which the second signaling includes the indication information,
in which, in a case that the network device is a base station, the second signaling at least includes:
a radio resource control (RRC) message.

In some embodiments of the present disclosure, transmitting the indication information to the network device includes:
transmitting a second signaling to the network device, in which the second signaling includes the indication information,
in which, in a case that the network device is a location management function (LMF), the second signaling includes at least one of:
a SLPP signaling;
a RSPP signaling; or
a long term evolution (LTE) positioning protocol (LPP) signaling.

In some embodiments of the present disclosure,
the SLPP signaling includes a third message providing assistant information, and the third message providing assistant information includes the indication information; and/or
the RSPP signaling includes a fourth message providing assistant information, and the fourth message providing assistant information includes the indication information; and/or
the LPP signaling includes a fifth message providing assistant information, and the fifth message providing assistant information includes the indication information.

In some embodiments of the present disclosure, the first terminal is in an out-of-coverage state, and the second terminal is in the out-of-coverage state or an in-coverage state.

In this embodiment, the first terminal initiates the SL positioning, and transmits the indication information to the second terminal, in which the indication information is configured to instruct the second terminal to determine the resource for transmitting the SL PRS, and/or transmits the indication information to the network device, in which the indication information is configured to instruct the network device to determine the resource for transmitting the SL PRS. Thus, the UE participating in the SL positioning and/or the network device responsible for resource allocation in the SL positioning may effectively determine the resources for transmitting SL PRS based on the indication information, thus effectively improving the positioning effect of the sidelink.

The communication device 100, on the side of the second terminal, includes:
the transceiving module 1001 configured to receive indication information transmitted by a first terminal, in which the indication information is configured to instruct the second terminal to determine a resource for transmitting an SL PRS, and SL positioning is initiated by a first terminal; and
the processing module 1002 configured to determine the resource for transmitting the SL PRS according to the indication information.

In some embodiments of the present disclosure, the indication information includes at least one of:
LCS QoS information; and
SL PRS configuration information.
In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position;
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; and
a frequency hopping indication, in which the frequency hopping indication indicates whether to hop a frequency.
In some embodiments of the present disclosure, the second terminal is a terminal for performing the SL positioning.

In some embodiments of the present disclosure, receiving the indication information transmitted by the first terminal includes:
receiving a first signaling transmitted by the first terminal, in which the first signaling includes the indication information,
in which the first signaling includes at least one of:
a sidelink positioning protocol (SLPP) signaling; and
a ranging and sidelink positioning protocol (RSPP) signaling.

In some embodiments of the present disclosure,
the SLPP signaling includes a first message providing assistant information, and the first message providing assistant information includes the indication information; and/or
the RSPP signaling includes a second message providing assistant information, and the second message providing assistant information includes the indication information.

In some embodiments of the present disclosure, determining the resource for transmitting the SL PRS according to the indication information includes:
transmitting the indication information to a network device in response to that the second terminal is in a first resource allocation mode; and
acquiring the resource for transmitting the SL PRS configured by the network device based on the indication information.

In some embodiments of the present disclosure, transmitting the indication information to the network device includes:
transmitting a third signaling to the network device, in which the third signaling includes the indication information,
in which the third signaling includes at least one of:
a SidelinkUEInformationNR signaling;
an SLPP signaling;
a RSPP signaling; and
a long term evolution (LTE) positioning protocol (LPP) signaling.

In some embodiments of the present disclosure, determining the resource for transmitting the SL PRS according to the indication information includes:
in response to that the second terminal is in a second resource allocation mode, selecting the resource for transmitting the SL PRS according to the indication information.

In some embodiments of the present disclosure, the first terminal is in an out-of-coverage state, and the second terminal is in the out-of-coverage state or an in-coverage state.

In this embodiment, the indication information transmitted by the first terminal is received, the indication information is configured to instruct the second terminal to determine the resource for transmitting the SL PRS, the SL positioning is initiated by the first terminal, and the resource for transmitting the SL PRS is determined according to the indication information, so that the UE participating in the SL positioning may effectively determine the resource for transmitting the SL PRS based on the indication information, thus effectively improving the positioning effect of the sidelink.

The communication device 100, on the side of the network device, includes:
the transceiving module 1001 configured to receive indication information transmitted by a first terminal, in which the indication information is configured to instruct the network device to determine a resource for transmitting an SL PRS, and SL positioning is initiated by a first terminal; and
the processing module 1002 configured to determine the resource for transmitting the SL PRS according to the indication information.

In some embodiments of the present disclosure, the indication information includes at least one of:
LCS QoS information; and
SL PRS configuration information.

In some embodiments of the present disclosure, the LCS QoS information includes at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position;
a request zenith angle.

In some embodiments of the present disclosure, the SL PRS configuration information includes at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; and
a frequency hopping indication, in which the frequency hopping indication indicates whether to hop a frequency.

In some embodiments of the present disclosure, receiving the indication information transmitted by the first terminal includes:
receiving second signaling transmitted by the first terminal, in which the second signaling includes the indication information,
in which in a case that the network device is a base station, the second signaling at least includes:
a radio resource control (RRC) message.

In some embodiments of the present disclosure, receiving the indication information transmitted by the first terminal includes:
receiving second signaling transmitted by the first terminal, in which the second signaling includes the indication information,
in which in a case that the network device is a location management function (LMF), the second signaling includes at least one of:
a sidelink positioning protocol (SLPP) signaling;
a ranging and sidelink positioning protocol (RSPP) signaling; and
a long term evolution (LTE) positioning protocol (LPP) signaling.
In some embodiments of the present disclosure,
the SLPP signaling includes a third message providing assistant information, and the third message providing assistant information includes the indication information; and/or
the RSPP signaling includes a fourth message providing assistant information, and the fourth message providing assistant information includes the indication information; and/or
the LPP signaling includes a fifth message providing assistant information, and the fifth message providing assistant information includes the indication information.

In some embodiments of the present disclosure, the method further includes:
receiving indication information transmitted by a second terminal; and
according to the indication information, configuring the resource for transmitting the SL PRS for the second terminal, in which the configured resource for transmitting the SL PRS is configured for the second terminal to transmit the SL PRS.

In some embodiments of the present disclosure, receiving the indication information transmitted by the second terminal includes:
receiving a third signaling transmitted by the second terminal, in which the third signaling includes the indication information,
in which the third signaling includes at least one of:
a SidelinkUEInformationNR signaling;
an SLPP signaling;
a RSPP signaling; and
an LPP signaling.

In some embodiments of the present disclosure, the second terminal is a terminal for performing the SL positioning.

In some embodiments of the present disclosure, the first terminal is in an out-of-coverage state, and the second terminal is in the out-of-coverage state or an in-coverage state.

In this embodiment, the indication information transmitted by the first terminal is received, the indication information is configured to instruct the network device to determine the resource for transmitting the SL PRS, the SL positioning is initiated by the first terminal, and the resource for transmitting the SL PRS is determined according to the indication information, so that the network device may effectively determine the resource for transmitting the SL PRS based on the indication information, thus effectively improving the positioning effect of the sidelink.

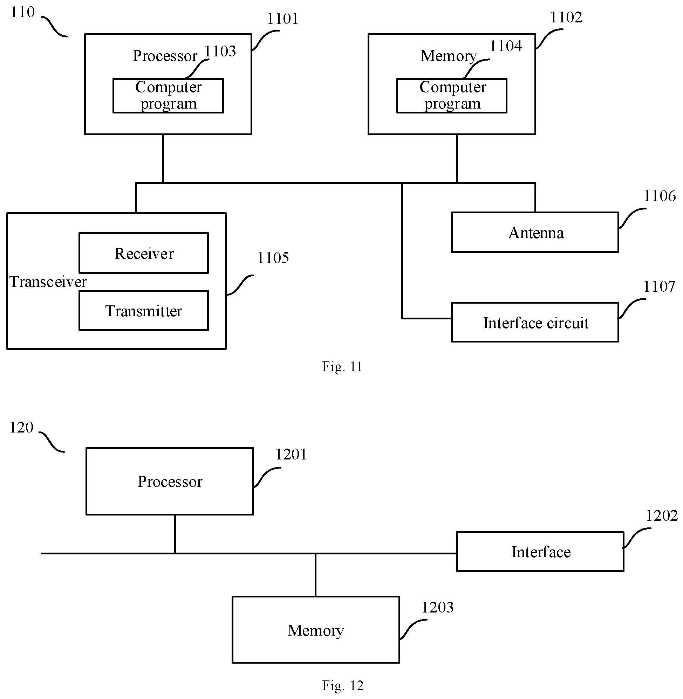

Fig. 11 is a schematic diagram of another communication device 110 according to an embodiment of the present disclosure. The communication device 110 may be a network device (such as the network device in the above method embodiments), a terminal (such as the first terminal or the second terminal in the above method embodiments), a chip, a chip system or a processor that supports the network device to realize the above methods, or a chip, a chip system or a processor that supports the terminal to realize the above methods. The device may be used to realize the methods described in the above method embodiments, for details, reference may be made to the description in the above method embodiments.

The communication device 110 may include one or more processors 1101. The processor 1101 may be a general-purpose processor or a special-purpose processor or the like, for example, a baseband processor or a central processor. The baseband processor may be used to process communication protocols and communication data, and the central processor may be used to control communication devices (such as base stations, baseband chips, terminals, terminal chips, DUs or CUs, etc.), execute computer programs, and process data of computer programs.

Optionally, the communication device 110 may further include one or more memories 1102, on which a computer program 1104 may be stored, a computer program 1103 may be stored in the processor 1101, and the processor 1101 executes the computer program 1104 and/or the computer program 1103, so that the communication device 110 may execute the methods described in the above method embodiments. Optionally, data may also be stored in the memory 1102. The communication device 110 and the memory 1102 may be arranged separately or integrated together.

Optionally, the communication device 110 may further include a transceiver 1105 and an antenna 1106. The transceiver 1105 may be called a transceiving unit, a transceiving machine, a transceiving circuit, etc., and is used to realize a transceiving function. The transceiver 1105 may include a receiver and a transmitter, the receiver may be called a receiving machine or a receiving circuit, etc., for realizing a receiving function, and the transmitter may be called a transmitting machine or a transmitting circuit, etc., for realizing a transmitting function.

Optionally, the communication device 110 may further include one or more interface circuits 1107. The interface circuit 1107 is used to receive code instructions and transmit them to the processor 1101. The processor 1101 executes the code instructions to cause the communication device 110 to perform the methods described in the above method embodiments.

In an implementation, the processor 1101 may include a transceiver for realizing receiving and transmitting functions. For example, the transceiver may be a transceiving circuit, or an interface, or an interface circuit. The transceiving circuit, interface or interface circuit for realizing the receiving and transmitting functions may be separated or integrated. The transceiving circuit, interface or interface circuit may be used for reading and writing codes/data, or the transceiving circuit, interface or interface circuit may be used for signal transmission or transfer.

In an implementation, the processor 1101 may store a computer program 1103, and the computer program 1103 runs on the processor 1101, which may cause the communication device 110 to execute the methods described in the above method embodiments. The computer program 1103 may be embedded in the processor 1101, in which case the processor 1101 may be implemented by hardware.

In an implementation, the communication device 110 may include a circuit, and the circuit may realize the functions of transmitting or receiving or communicating in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as complementary metal oxide semiconductor (CMOS), negative channel metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal (such as the first terminal or the second terminal in the aforementioned method embodiments) or a network device (such as the network device in the aforementioned method embodiments), but the scope of the communication device described in the present disclosure is not limited to this, and the structure of the communication device may not be limited by Fig. 11. The communication device may be a stand-alone device or may be part of a large device. For example, the communication device may be:
(1) an independent integrated circuit IC, or a chip, or a chip system or subsystem;
(2) a set with one or more ICs, optionally, the IC set may also include storage components for storing data and computer programs;
(3) an ASIC, such as a modem;
(4) a Module that may be embedded in other devices;
(5) a receiving machine, a terminal, an intelligent terminal, a cellular phone, a wireless device, a handset, a mobile unit, a vehicle-mounted device, a network device, a cloud device, an artificial intelligence device, etc.
(6) others and so on.

In a case that the communication device may be a chip or a chip system, reference may be made to a schematic diagram of a chip shown in Fig. 12. The chip shown in Fig. 12 includes a processor 1201 and an interface 1202. One or more processors 1201 may be arranged, and multiple interfaces 1202 may be arranged.

In a case that the chip is used to realize the function of the first terminal in the embodiments of the present disclosure, the interface 1202 is used to implement one or more steps in Figs. 2 to 4.

In a case that the chip is used to realize the function of the second terminal in the embodiments of the present disclosure, the interface 1202 is used to implement one or more steps in Figs. 5 to 7.

In a case that the chip is used to realize the function of the network device in the embodiments of the present disclosure, the interface 1202 is used to implement one or more steps in Figs. 8 to 9.

Optionally, the chip further includes a memory 1203 for storing necessary computer programs and data.

Those skilled in the art may also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art may use various methods to realize the functions for each specific application, but this realization should not be understood as beyond the scope of protection of the embodiments of the present disclosure.

The embodiments of the present disclosure also provides a communication system, which includes the communication device in the aforementioned embodiment of Fig. 10 as a terminal device (such as the first terminal device or the second terminal device in the aforementioned method embodiments) and the communication device in the aforementioned embodiment of Fig. 10 as a network device (such as the network device in the aforementioned method embodiments), or the system includes the communication device in the aforementioned embodiment of Fig. 11 as a terminal device (such as the first terminal device or the second terminal device in the aforementioned method embodiments) and the communication device in the aforementioned embodiment of Fig. 11 as a network device (such as the network device in the aforementioned method embodiments).

The present disclosure also provides a readable storage medium on which instructions are stored, which, when executed by a computer, realize the functions of any of the above method embodiments.

The present disclosure also provides a computer program product which, when executed by a computer, realizes the functions of any of the above method embodiments.

The above embodiments may be realized in whole or in part by software, hardware, firmware or any combination thereof. When implemented in software, it may be in whole or in part implemented in the form of a computer program product. The computer program product includes one or more computer programs. When the computer program is loaded and executed on a computer, the flows or functions according to the embodiments of the present disclosure are generated in whole or in part. The computer may be a general-purpose computer, a special-purpose computer, a computer network, or other programmable devices. The computer program may be stored in a computer-readable storage medium or transmitted from one computer-readable storage medium to another. For example, the computer program may be transmitted from a website, computer, server or data center to another website, computer, server or data center in a wired (such as a coaxial cable, an optical fiber, a digital subscriber line (DSL)) or wireless (such as infrared, wireless, microwave, etc.) manner. The computer-readable storage medium may be any available medium that a computer may access or a data storage device such as a server, a data center and the like that contains one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

It may be understood by those skilled in the art that the numerical numbers such as first, second and the like involved in the present disclosure are only for the convenience of description, and are not used to limit the scope of the embodiments of the present disclosure, and also do not indicate the order.

At least one in the present disclosure may also be described as one or more, and a plurality may be two, three, four or more, which is not limited in the present disclosure. In the embodiments of the present disclosure, for a technical feature, the technical features in the technical feature are distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure may be configured or predefined. The values of the information in each table are only examples and may be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate deformation adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables.

The predefinition in the present disclosure may be understood as definition, definition in advance, storage, pre-storage, pre-negotiation, pre-configuration, embedment, or pre-burning.

Those skilled in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical scheme. Professional and technical personnel may use different methods to implement the described functions for each specific application, but such implementation should not be considered to be beyond the scope of the present disclosure.

Those skilled in the art may clearly understand that, for the convenience and brevity of description, the specific working processes of the systems, devices and units described above may refer to the corresponding processes in the aforementioned method embodiments and will not be repeated here.

The above is only a specific embodiment of the present disclosure, but the protection scope of the present disclosure is not limited thereto. Those skilled who are familiar with the related art may easily think of changes or substitutions within the technical scope of the present disclosure, which should be included in the protection scope of the present disclosure. Therefore, the protection scope of the present disclosure should be based on the protection scope of the claims.

## Claims

1. A method for determining a sidelink-based positioning reference signal (PRS) resource, performed by a first terminal, and comprising:
initiating sidelink (SL) positioning;
transmitting indication information to a second terminal, wherein the indication information is configured to instruct the second terminal to determine a resource for transmitting a sidelink positioning reference signal (SL PRS); and/or
transmitting indication information to a network device, wherein the indication information is configured to instruct the network device to determine a resource for transmitting a sidelink positioning reference signal (SL PRS).

2. The method according to claim 1, wherein the indication information comprises at least one of:
sidelink location service quality of service (LCS QoS) information; or
SL PRS configuration information.

3. The method according to claim 2, wherein the LCS QoS information comprises at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position; or
a request zenith angle.

4. The method according to claim 2, wherein the SL PRS configuration information comprises at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, wherein the frequency hopping indication indicates whether to hop a frequency.

5. The method according to claim 1, wherein the second terminal is a terminal for performing the SL positioning.

6. The method according to any one of claims 1-5, wherein transmitting the indication information to the second terminal comprises:
transmitting a first signaling to the second terminal, wherein the first signaling comprises the indication information,
wherein the first signaling comprises at least one of:
a sidelink positioning protocol (SLPP) signaling; or
a ranging and sidelink positioning protocol (RSPP) signaling.

7. The method according to claim 6, wherein
the SLPP signaling comprises a first message providing assistant information, and the first message providing assistant information comprises the indication information; and/or
the RSPP signaling comprises a second message providing assistant information, and the second message providing assistant information comprises the indication information.

8. The method according to any one of claims 1-5, wherein transmitting the indication information to the network device comprises:
transmitting a second signaling to the network device, wherein the second signaling comprises the indication information,
wherein in a case that the network device is a base station, the second signaling at least comprises:
a radio resource control (RRC) message.

9. The method according to any one of claims 1-5, wherein transmitting the indication information to the network device comprises:
transmitting a second signaling to the network device, wherein the second signaling comprises the indication information,
wherein in a case that the network device is a location management function (LMF), the second signaling comprises at least one of:
a SLPP signaling;
a RSPP signaling; or
a long term evolution (LTE) positioning protocol (LPP) signaling.

10. The method according to claim 9, wherein
the SLPP signaling comprises a third message providing assistant information, and the third message providing assistant information comprises the indication information; and/or
the RSPP signaling comprises a fourth message providing assistant information, and the fourth message providing assistant information comprises the indication information; and/or
the LPP signaling comprises a fifth message providing assistant information, and the fifth message providing assistant information comprises the indication information.

11. The method according to any one of claims 1-10, wherein the first terminal is in an out-of-coverage state, and the second terminal is in the out-of-coverage state or an in-coverage state.

12. A method for determining a sidelink-based positioning reference signal (PRS) resource, performed by a second terminal, and comprising:
receiving indication information transmitted by a first terminal, wherein the indication information is configured to instruct the second terminal to determine a resource for transmitting a sidelink positioning reference signal (SL PRS), and sidelink (SL) positioning is initiated by a first terminal; and
determining the resource for transmitting the SL PRS according to the indication information.

13. The method according to claim 12, wherein the indication information comprises at least one of:
sidelink location service quality of service (LCS QoS) information; or
SL PRS configuration information.

14. The method according to claim 13, wherein the LCS QoS information comprises at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position; or
a request zenith angle.

15. The method according to claim 13, wherein the SL PRS configuration information comprises at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, wherein the frequency hopping indication indicates whether to hop a frequency.

16. The method according to claim 12, wherein the second terminal is a terminal for performing the SL positioning.

17. The method according to any one of claims 12-16, wherein receiving the indication information transmitted by the first terminal comprises:
receiving a first signaling transmitted by the first terminal, wherein the first signaling comprises the indication information,
wherein the first signaling comprises at least one of:
a sidelink positioning protocol (SLPP) signaling; or
a ranging and sidelink positioning protocol (RSPP) signaling.

18. The method according to claim 17, wherein
the SLPP signaling comprises a first message providing assistant information, and the first message providing assistant information comprises the indication information; and/or
the RSPP signaling comprises a second message providing assistant information, and the second message providing assistant information comprises the indication information.

19. The method according to any one of claims 12-18, wherein determining the resource for transmitting the SL PRS according to the indication information comprises:
transmitting the indication information to a network device in response to that the second terminal is in a first resource allocation mode; and
acquiring the resource for transmitting the SL PRS configured by the network device based on the indication information.

20. The method according to claim 19, wherein transmitting the indication information to the network device comprises:
transmitting a third signaling to the network device, wherein the third signaling comprises the indication information,
wherein the third signaling comprises at least one of:
a SidelinkUEInformationNR signaling;
an SLPP signaling;
a RSPP signaling; or
a long term evolution (LTE) positioning protocol (LPP) signaling.

21. The method according to any one of claims 12-18, wherein determining the resource for transmitting the SL PRS according to the indication information comprises:
in response to that the second terminal is in a second resource allocation mode, selecting the resource for transmitting the SL PRS according to the indication information.

22. The method according to any one of claims 12-21, wherein the first terminal is in an out-of-coverage state, and the second terminal is in the out-of-coverage state or an in-coverage state.

23. A method for determining a sidelink-based positioning reference signal (PRS) resource, performed by a network device, and comprising:
receiving indication information transmitted by a first terminal, wherein the indication information is configured to instruct the network device to determine a resource for transmitting a sidelink positioning reference signal (SL PRS), and sidelink (SL) positioning is initiated by the first terminal; and
determining the resource for transmitting the SL PRS according to the indication information.

24. The method according to claim 23, wherein the indication information comprises at least one of:
sidelink location service quality of service (LCS QoS) information; or
SL PRS configuration information.

25. The method according to claim 24, wherein the LCS QoS information comprises at least one of:
an LCS QoS class;
an LCS QoS accuracy;
an LCS QoS response time;
an LCS QoS distance range parameter;
a request vertical coordinate;
a request speed;
a request distance;
a request angle;
a request relative position;
a request absolute position; or
a request zenith angle.

26. The method according to claim 24, wherein the SL PRS configuration information comprises at least one of:
an SL PRS bandwidth;
an SL PRS comb size;
an SL PRS orthogonal frequency division multiplexing (OFDM) symbol number;
an SL PRS subcarrier spacing;
an SL PRS carrier frequency;
an SL PRS time-frequency resource location; or
a frequency hopping indication, wherein the frequency hopping indication indicates whether to hop a frequency.

27. The method according to any one of claims 23-26, wherein receiving the indication information transmitted by the first terminal comprises:
receiving second signaling transmitted by the first terminal, wherein the second signaling comprises the indication information,
wherein in a case that the network device is a base station, the second signaling at least comprises:
a radio resource control (RRC) message.

28. The method according to any one of claims 23-26, wherein receiving the indication information transmitted by the first terminal comprises:
receiving second signaling transmitted by the first terminal, wherein the second signaling comprises the indication information,
wherein in a case that the network device is a location management function (LMF), the second signaling comprises at least one of:
a sidelink positioning protocol (SLPP) signaling;
a ranging and sidelink positioning protocol (RSPP) signaling; or
a long term evolution (LTE) positioning protocol (LPP) signaling.

29. The method according to claim 28, wherein
the SLPP signaling comprises a third message providing assistant information, and the third message providing assistant information comprises the indication information; and/or
the RSPP signaling comprises a fourth message providing assistant information, and the fourth message providing assistant information comprises the indication information; and/or
the LPP signaling comprises a fifth message providing assistant information, and the fifth message providing assistant information comprises the indication information.

30. The method according to any one of claims 23-26, further comprising:
receiving indication information transmitted by a second terminal; and
according to the indication information, configuring the resource for transmitting the SL PRS for the second terminal, wherein the configured resource for transmitting the SL PRS is configured for the second terminal to transmit the SL PRS.

31. The method according to claim 30, wherein receiving the indication information transmitted by the second terminal comprises:
receiving a third signaling transmitted by the second terminal, wherein the third signaling comprises the indication information,
wherein the third signaling comprises at least one of:
a SidelinkUEInformationNR signaling;
an SLPP signaling;
a RSPP signaling; or
an LPP signaling.

32. The method according to claim 30, wherein the second terminal is a terminal for performing the SL positioning.

33. The method according to any one of claims 30-32, wherein the first terminal is in an out-of-coverage state, and the second terminal is in the out-of-coverage state or an in-coverage state.

34. A communication device, comprising:
a processing module configured to initiate sidelink (SL) positioning; and
a transceiving module configured to transmit indication information to a second terminal, wherein the indication information is configured to instruct the second terminal to determine a resource for transmitting a sidelink positioning reference signal (SL PRS); and/or transmit indication information to a network device, wherein the indication information is configured to instruct the network device to determine a resource for determining a sidelink positioning reference signal (SL PRS).

35. A communication device, comprising:
a transceiving module configured to receive indication information transmitted by a first terminal, wherein the indication information is configured to instruct a second terminal to determine a resource for transmitting a sidelink positioning reference signal (SL PRS), and SL positioning is initiated by the first terminal; and
a processing module configured to determine the resource for transmitting the SL PRS according to the indication information.

36. A communication device, comprising:
a transceiving module configured to receive indication information transmitted by a first terminal, wherein the indication information is configured to instruct a network device to determine a resource for transmitting a sidelink positioning reference signal (SL PRS), and SL positioning is initiated by the first terminal; and
a processing module configured to determine the resource for transmitting the SL PRS according to the indication information.

37. A communication system comprising a first terminal, a second terminal, and a network device, wherein the first terminal performs the method according to any one of claims 1 to 11, the second terminal performs the method according to any one of claims 12 to 22, and the network device performs the method according to any one of claims 23 to 33.

38. A computer-readable storage medium for storing instructions which, when executed, cause the method according to any one of claims 1-33 to be implemented.
